# EUROPEAN PATENT SPECIFICATION

(11) **EP 4 047 788 B1**
(45) Date of publication and mention of the grant of the patent: **22.04.2026**
(21) Application number: 22155967.7
(22) Date of filing: 09.02.2022
(51) Int. Cl.: H02K 1/276

(54) **ROTARY ELECTRIC MACHINE**
ELEKTRISCHE DREHMASCHINE
MACHINE TOURNANTE ÉLECTRIQUE

(30) Priority: 09.02.2021 JP 2021019003
(43) Date of publication of application: 24.08.2022
(73) Proprietor: Suzuki Motor Corporation, Hamamatsu-shi, Shizuoka 432-8611 (JP)
(72) Inventor: Akaki, Ryosuke, Hamamatsu-shi, 432-8611 (JP)
(74) Representative: Henkel & Partner mbB

(56) References cited:
- EP-A1- 1 965 484
- CN-A- 109 149 811
- CN-U- 212 486 356
- JP-A- 2008 278 591
- JP-A- 2011 097 783
- JP-A- 2013 188 023

## Description

### [Technical Field]

This invention relates to a rotary electric machine.

### [Background of the Invention]

In a conventional rotary electric machine, a rotor core provided with a pair of magnet holes for arranging a pair of magnets in a V shape includes an outer bridge portion formed in outer peripheral portions of the pair of magnet holes and a band-shaped center bridge portion formed in a portion between the pair of magnet holes to extend radially and a large centrifugal force acts on the bridge portion due to the rotation of a rotor (see JP 2005-57958 A). In the conventional rotary electric machine described in JP 2005-57958 A, the center bridge portion is provided with a narrow neck portion. In the rotary electric machine described in JP 2005-57958 A, the plasticity at a bottom of a notch is constrained (plasticity restraint) and the strength of the center bridge portion is increased due to the phenomenon of strengthening the notch by providing the neck portion, so that the rotary electric machine can rotate at a high rotation speed.

[Patent Literature 2] discloses that a rotor of a rotating electric machine comprises a rotor core, a plurality of magnet insertion holes provided in the outer circumferential part of the rotor core at constant intervals in the circumferential direction, permanent magnets for magnetic pole formation inserted into the respective magnet insertion holes and an outer circumferential hole provided in the outer circumferential part of the rotor core. The outer circumferential hole in the circumferential direction of the rotor core ranges from a position of a predetermined angle for the d axis to a position of a predetermined angle for the d axis, i.e., near the chip portion existing on the side separating from the d axis (q axis side).

[Patent Literature 3] discloses a rotor punching piece of a permanent magnet synchronous motor, the rotor punching sheet including a punching sheet body, a shaft hole arranged on the punching sheet body and a plurality of permanent magnet groove groups for placing permanent magnets, the shaft hole being located at the center of the punching sheet body. The permanent magnet groove group is uniformly arranged at the periphery of the shaft hole, and the permanent magnet groove group comprises a main permanent magnet groove and two sub permanent magnet grooves, wherein the two sub permanent magnet grooves are arranged in a V-shape in the direction close to the shaft hole, and the main permanent magnet groove is located at the V-shape opening and does not contact with the sub permanent magnet groove. The permanent magnet groove group comprises a main permanent magnet groove and two sub permanent magnet grooves.

[Patent Literature 4] discloses that a rotor core comprises an inter-pole flux barrier which is disposed at a position between the edge of the rotor core and a plurality of permanent magnets and extending over poles formed by a prescribed number of permanent magnets. The inter-pole flux barrier comprises: a first flux barrier which is formed of a hole at a portion corresponding to a q-axis; and a second flux barrier which is formed of a hole at a portion adjacent to the first flux barrier in a circumferential direction. The rotor core comprises: a first bridge which is formed in a core between the first flux barrier/the second flux barrier and the outer edge side of the rotor core in the circumferential direction; a second bridge which is formed in the core between the permanent magnet and the first flux barrier; and a third bridge which is formed between the first flux barrier and the second flux barrier, and connects the first bridge with the second bridge by the core.

[Patent Literature 5] discloses a rotor of a built-in permanent magnet motor, the built-in permanent magnet motor and a compressor. The rotor comprises a rotor core, a plurality of U-shaped permanent magnet accommodating grooves, a plurality of first air grooves and a plurality of first concave parts. The plurality of U-shaped permanent magnet accommodating grooves are formed in the rotor core at intervals; the plurality of first air grooves are formed outside the end parts of the U-shaped permanent magnet accommodating grooves; and each first air groove is positioned on the extension line of the end part of the corresponding U-shaped permanent magnet accommodating groove and is close to the outer contour of the rotor so as to form a plurality of first magnetic isolation bridges. Each first concave part is concave downwards from the outer contour of the rotor to the center of the rotor, starts from the tail end of the corresponding first magnetic isolation bridge on the outermost side of the rotor, and extends to a first intersection point of a connecting line of the center of the bottom of the U-shaped permanent magnet accommodating groove and the center of the rotor and the outer contour of the rotor at most; an air gap flux density generated between the outer contour of the rotor and the inner contour of the stator of the built-in permanent magnet motor is close to a sine curve.

### [Prior Art]

### [Patent Literature]

[Patent Literature 1] JP 2005-57958 A
[Patent Literature 2] JP 2008-278591 A
[Patent Literature 3] CN 109 149 811 A
[Patent Literature 4] JP 2013-188023 A
[Patent Literature 5] CN 212 486 356 U
[Patent Literature 6] EP 1 965 484 A1
[Patent Literature 7] JP 2011 097783 A

### [Summary of the Invention]

### [Problem to be solved by the Invention]

However, in the rotary electric machine described in JP 2005-57958 A, there are a problem that the thickness of the outer bridge portion and the center bridge portion is increased and the size of the rotor needs to be increased and a problem that the leakage magnetic flux passing through the outer bridge portion and the center bridge portion increases and the magnetic flux density decreases when trying to cope with higher rotation.

This invention has been made in view of the above-described circumstances and an object is to provide a rotary electric machine capable of suppressing a bridge portion from being deformed by a centrifugal force without increasing the thickness of the bridge portion and suppressing a decrease in magnetic flux density in accordance with an increase in leakage magnetic flux.

### [Means to solve the problem]

In order to attain the above-described objects, there is provided a rotary electric machine as outlined in the new independent claim 1. An advantageous development is defined in the dependent claim 2.

### [Effect of the Invention]

According to this invention, it is possible to provide a rotary electric machine capable of suppressing a bridge portion from being deformed by a centrifugal force without increasing the thickness of the bridge portion and suppressing a decrease in magnetic flux density in accordance with an increase in leakage magnetic flux.

### [Brief description of figures]

[Fig. 1] Fig. 1 is a cross-sectional view in which a rotary electric machine according to an embodiment of this invention is cut in a plane orthogonal to a rotating shaft.
[Fig. 2] Fig. 2 is a cross-sectional view of a part of a rotor of the rotary electric machine according to an embodiment of this invention.
[Fig. 3] Fig. 3 is an enlarged view in the vicinity of a first flux barrier of the rotor of the rotary electric machine according to an embodiment of this invention.
[Fig. 4] Fig. 4 is a diagram showing a stress distribution by a centrifugal force in the rotary electric machine according to an embodiment of this invention.
[Fig. 5] Fig. 5 is a diagram showing a magnetic flux distribution of the rotary electric machine according to an embodiment of this invention.
[Fig. 6] Fig. 6 is a diagram showing a stress distribution by a centrifugal force of a rotary electric machine according to a comparative example.
[Fig. 7] Fig. 7 is a diagram showing a magnetic flux distribution in the rotary electric machine according to a comparative example.

### [Embodiment(s) of the Invention]

A rotary electric machine according to embodiments of this invention is a rotary electric machine including: a stator provided with a plurality of slots for arranging armature windings therein; and a rotor provided with a rotor core for embedding a plurality of pairs of permanent magnets arranged in a V shape extending toward the stator, wherein the rotor core includes: a first flux barrier formed adjacent to each of outer peripheral ends of the pair of permanent magnets, a second flux barrier formed adjacent to inner peripheral ends of the pair of permanent magnets, an outer bridge portion circumferentially extending along an outer peripheral surface of the rotor core on an outer peripheral side of the first flux barrier, a center bridge portion radially extending through the second flux barrier and connecting an outer peripheral side and an inner peripheral side of the rotor core, and a bridging portion passing through the first flux barrier and connecting the outer bridge portion and an inner peripheral portion of the rotor core. Accordingly, the rotary electric machine according to embodiments of this invention can suppress the bridge portion from being deformed by a centrifugal force without increasing the thickness of the bridge portion and suppressing a decrease in magnetic flux density in accordance with an increase in leakage magnetic flux.

### [Embodiments]

Hereinafter, an embodiment of a rotary electric machine according to this invention will be described with reference to the drawings.

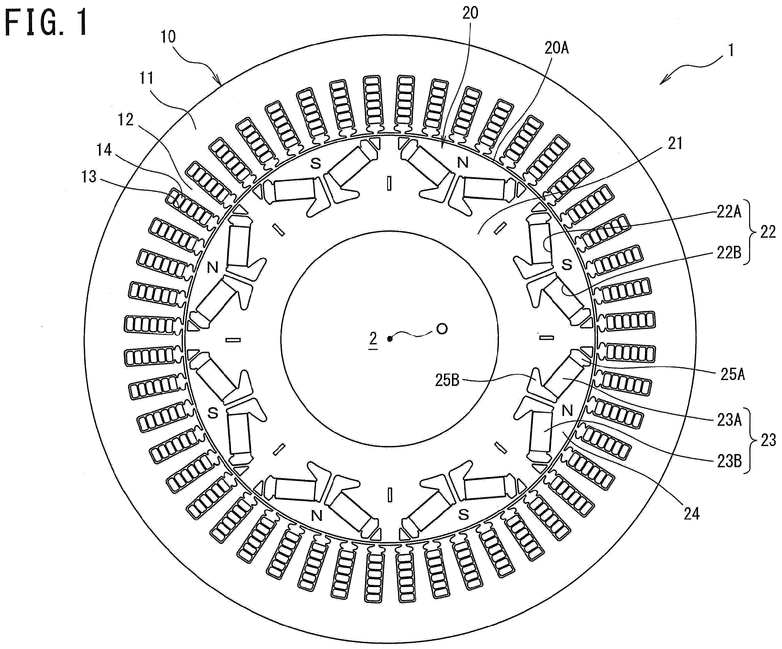

In Fig. 1, a rotary electric machine 1 according to this embodiment is an interior permanent magnet synchronous motor (hereinafter, referred to as IPMSM) in which a permanent magnet is embedded in a rotor. The rotary electric machine 1 has a performance suitable to be mounted on, for example, a hybrid vehicle or an electric vehicle.

The rotary electric machine 1 includes a stator 10 which is formed in an annular shape and a rotor 20 which is rotatably accommodated in the stator 10. The rotor 20 is fixed to a rotating shaft 2 rotating around an axis O and is rotated together with the rotating shaft 2.

The stator 10 is fixed to a motor casing (not shown). The stator 10 includes an annular stator core 11 made of a magnetic material having a high magnetic permeability. The stator core 11 is formed by laminating electromagnetic steel sheets in the axial direction along the axis of the rotating shaft 2.

A plurality of stator teeth 12 which protrude radially inward are provided in the stator core 11 in the circumferential direction. A plurality of slots 13 which are groove-shaped spaces are formed between the stator teeth 12 adjacent to each other in the circumferential direction.

The radial direction indicates a direction orthogonal to the axial direction. The inner side in the radial direction indicates the side closer to the rotating shaft 2 in the radial direction and the outer side in the radial direction indicates the side farther from the rotating shaft 2 in the radial direction. The circumferential direction indicates the circumferential direction centered on the rotating shaft 2.

Three-phase armature windings 14 of W phase, V phase, and U phase are respectively arranged in the slots 13 of the stator core 11 in the circumferential direction of the stator core 11. The W-phase, V-phase, and U-phase armature windings 14 are distributed and wound around the respective stator teeth 12.

The stator 10 generates a rotating magnetic field that rotates in the circumferential direction by three-phase alternating current supplied to the armature winding 14. The magnetic flux generated in the stator 10 is designed to interlink with the rotor 20. Accordingly, the stator 10 can rotate the rotor 20.

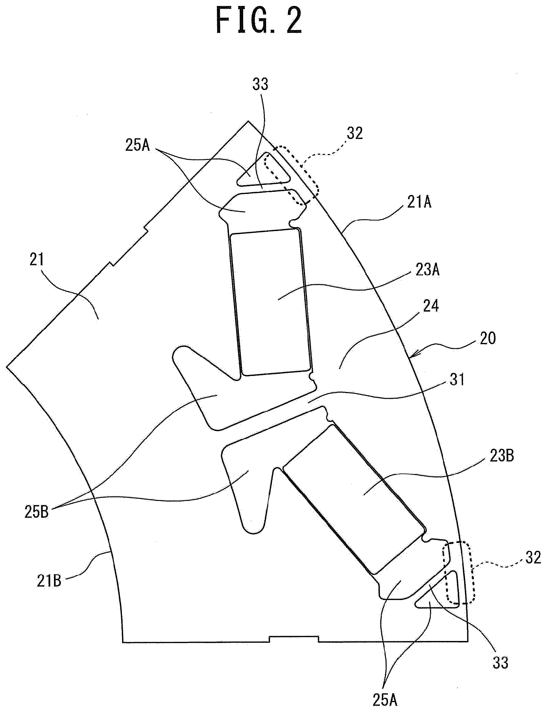

In Fig. 2, the rotor 20 includes an annular rotor core 21, a plurality of permanent magnet pairs 23, and a magnetic pole portion 24.

The rotor core 21 is formed by laminating an electromagnetic steel plate which is a magnetic material having a high magnetic permeability in the axial direction along the axis of the rotating shaft 2. A plurality of slit pairs 22 are formed in the rotor core 21 in the circumferential direction of the rotor 20. An inner peripheral surface 21B of the rotor core 21 is fixed to the rotating shaft 2.

The slit pair 22 includes a pair of slits 22A and 22B. The pair of slits 22A and 22B are provided to be in a V shape that extends from the inner side in the radial direction to the outer side in the radial direction, that is, toward the stator.

Permanent magnets 23A and 23B are fitted into the pair of slits 22A and 22B. The pair of permanent magnets 23A and 23B are arranged in a V shape that extends from the inner side in the radial direction toward the outer side in the radial direction, that is, toward the stator and constitute a permanent magnet pair 23.

The permanent magnet 23A and the permanent magnet 23B are arranged so that the same polar surfaces face each other. Accordingly, a magnetic pole portion 24 having the same polarity as the facing polar surface is formed between the permanent magnet 23A and the permanent magnet 23B. In this way, the magnetic pole portion 24 is formed as an N magnetic pole portion or an S magnetic pole portion depending on the polarities of the permanent magnets 23A and 23B arranged in a V shape.

The pair of permanent magnets 23A and 23B are arranged so that the polar surfaces are opposite to each other between the adjacent permanent magnet pairs 23 in the circumferential direction. Accordingly, the polarities of the magnetic pole portions 24 adjacent to each other in the circumferential direction are opposite to each other, that is, the magnetic pole portions 24 have opposite polarities. Thus, in the rotor 20, the magnetic pole portion 24 of an N magnetic pole (referred to as "N" in Fig. 1) and the magnetic pole portion 24 of an S magnetic pole (referred to as "S" in Fig. 1) are alternately formed in the circumferential direction.

In this way, the rotor 20 has a reverse salient pole structure provided with the plurality of permanent magnet pairs 23 having the pair of permanent magnets 23A and 23B arranged in a V shape.

Since the rotor 20 has a reverse salient pole structure, the rotary electric machine 1 has a characteristic in which the inductance in the axial direction (hereinafter, referred to as the d-axis direction) passing between the pair of permanent magnets 23A and 23B is smaller than the inductance in the axial direction (hereinafter, referred to as the q-axis direction) passing between the adjacent permanent magnet pairs 23 in the circumferential direction and electrically and magnetically orthogonal to the d axis. Thus, in the reverse salient pole structure, reluctance torque can be generated according to the difference between the inductance in the d-axis direction and the inductance in the q-axis direction in addition to the magnet torque generated by the permanent magnet pair 23. Accordingly, it is possible to improve the torque density of the rotary electric machine 1.

Further, a first flux barrier 25A and a second flux barrier 25B are formed in the rotor core 21 to be adjacent to the pair of permanent magnets 23A and 23B. The first flux barrier 25A and the second flux barrier 25B are voids for limiting the wraparound of the magnetic flux.

The first flux barrier 25A is formed adjacent to each of the outer peripheral ends of the pair of permanent magnets 23A and 23B. The second flux barrier 25B is formed between the pair of permanent magnets 23A and 23B to be adj acent to the inner peripheral ends of the permanent magnets 23A and 23B.

Additionally, in a state before the permanent magnets 23A and 23B are fitted into the rotor core 21, the respective corresponding slits 22A and 22B of the permanent magnets 23A and 23B and the first and second flux barriers 25A and 25B form a space in which these are continuous to each other.

The rotor core 21 includes an outer bridge portion 32 between the first flux barrier 25A and an outer peripheral surface 21A of the rotor core 21. Further, the rotor core 21 includes a band-shaped center bridge portion 31 passing through the second flux barrier 25B.

The outer bridge portion 32 circumferentially extends along the outer peripheral surface 21A of the rotor core 21 on the outer peripheral side of the first flux barrier 25A. The center bridge portion 31 radially extends through the second flux barrier 25B and connects the outer peripheral side and the inner peripheral side of the rotor core 21. Here, the outer peripheral side of the rotor core 21 means the outer part in the radial direction in relation to the second flux barrier 25B in the rotor core 21. Further, the inner peripheral side of the rotor core 21 means the inner part in the radial direction in relation to the second flux barrier 25B in the rotor core 21. Thus, the center bridge portion 31 connects the outer peripheral side and the inner peripheral side of the rotor core 21 by sandwiching the second flux barrier 25B in the radial direction.

Here, the centrifugal force acting on the permanent magnets 23A and 23B and the centrifugal force acting on the outer peripheral part in relation to the permanent magnets 23A and 23B in the rotor core 21 during the rotation of the rotor 20 concentrate on the center bridge portion 31 and the outer bridge portion 32. Therefore, the maximum rotation speed of the rotary electric machine 1 depends on the strength of the center bridge portion 31 and the outer bridge portion 32 of the rotor core 21.

When the thickness of the center bridge portion 31 and the outer bridge portion 32 is increased in order to increase the strength of the center bridge portion 31 and the outer bridge portion 32, the leakage magnetic flux passing through the center bridge portion 31 and the outer bridge portion 32 increases and the magnetic flux density decreases. Therefore, it is desirable to suppress the deformation of the bridge portion without increasing the thickness of the bridge portion.

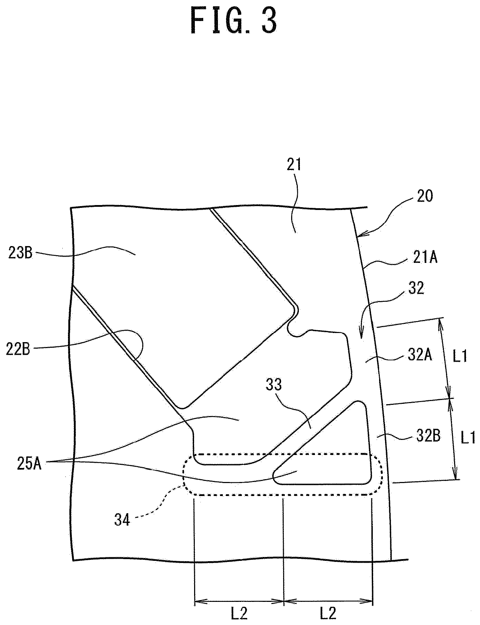

In Figs. 2 and 3, the rotor core 21 includes a bridging portion 33. The bridging portion 33 connects the outer bridge portion 32 and the inner peripheral portion of the rotor core 21 while passing through the first flux barrier 25A. Specifically, the bridging portion 33 connects the outer bridge portion 32 and the wall surface 34 of the rotor core 21. The wall surface 34 radially extends at a position circumferentially facing the outer peripheral ends of the permanent magnets 23A and 23B in the first flux barrier 25A. The bridging portion 33 extends linearly in an inclined posture with respect to the radial direction of the rotor 20.

The outer bridge portion 32 includes a first outer bridge portion 32A which is located on one side in the circumferential direction in relation to the connection position with the bridging portion 33 and a second outer bridge portion 32B which is located on the other side in the circumferential direction in relation to the connection position with the bridging portion 33. Then, the thickness of the second outer bridge portion 32B is smaller than the thickness of the first outer bridge portion 32A. Here, the thickness of the first outer bridge portion 32A and the second outer bridge portion 32B means the radial dimension. In other words, the second outer bridge portion 32B is formed to be thinner than the first outer bridge portion 32A.

The circumferential dimensions of the first outer bridge portion 32A and the second outer bridge portion 32B are both set to L1. The radial outer and inner dimensions of the connection portion with the bridging portion 33 in the wall surface 34 of the rotor core 21 are both set to L2. Thus, the bridging portion 33 connects the circumferential center portion of the outer bridge portion 32 and the radial center portion of the wall surface 34.

As described above, in the rotary electric machine 1 according to this embodiment, the rotor core 21 includes, as shown in Figs. 2 and 3, the first flux barrier 25A which is formed adjacent to each outer end of the pair of permanent magnets 23A and 23B, the second flux barrier 25B which is formed adjacent to the inner peripheral ends of the pair of permanent magnets 23A and 23B, the outer bridge portion 32 which circumferentially extends along the outer peripheral surface 21A of the rotor core 21 on the outer peripheral side of the first flux barrier 25A, and the center bridge portion 31 which radially extends through the second flux barrier 25B and connects the outer peripheral side and the inner peripheral side of the rotor core 21.

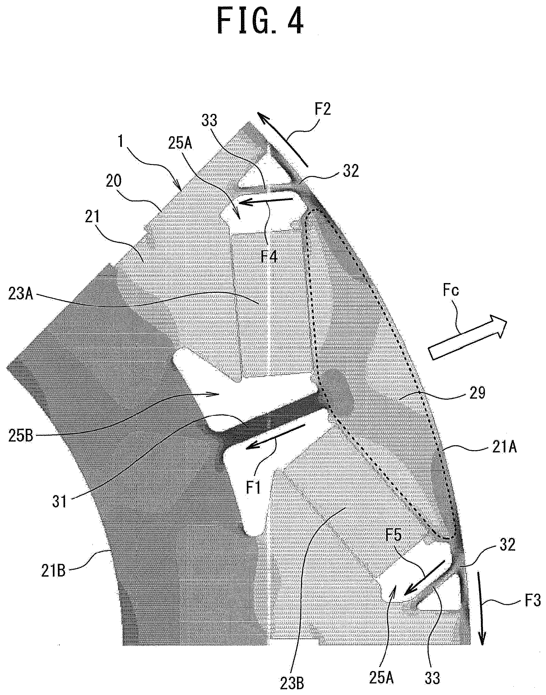

In the rotary electric machine 1 with such a configuration, as shown in Fig. 4, a centrifugal force Fc during the rotation of the rotor 20 acts on the pair of permanent magnets 23A and 23B and an outer peripheral part 29 which is an outer peripheral part in relation to the permanent magnets 23A and 23B of the rotor core 21. This centrifugal force Fc concentrates on the outer bridge portion 32 and the center bridge portion 31 and acts as stress in the tensile direction on the outer bridge portion 32 and the center bridge portion 31. With respect to the centrifugal force Fc, the center bridge portion 31 exerts a drag force F1 inward in the radial direction and the outer bridge portion 32 exerts drag forces F2 and F3 outward in the circumferential direction.

Then, the rotary electric machine 1 according to this embodiment includes the bridging portion 33 which passes through the first flux barrier 25A to connect the outer bridge portion 32 and the inner peripheral portion of the rotor core 21.

Accordingly, a part of stress acting on the outer bridge portion 32 can be handled by the bridging portion 33 and the bridging portion 33 can exert drag forces F4 and F5. Therefore, the centrifugal force acting on the rotor core 21 can be distributed to the center bridge portion 31, the outer bridge portion 32, and the bridging portion 33. Thus, it is possible to suppress the bridge portion from being deformed by the centrifugal force without increasing the thickness of the outer bridge portion 32 and the center bridge portion 31.

Further, since the thickness of the outer bridge portion 32 is not increased, it is possible to prevent an increase in leakage magnetic flux passing through the outer bridge portion 32 and to suppress a decrease in magnetic flux density in accordance with an increase in leakage magnetic flux.

As a result, it is possible to suppress the bridge portion from being deformed by the centrifugal force without increasing the thickness of the bridge portion and to suppress a decrease in magnetic flux density in accordance with an increase in leakage magnetic flux.

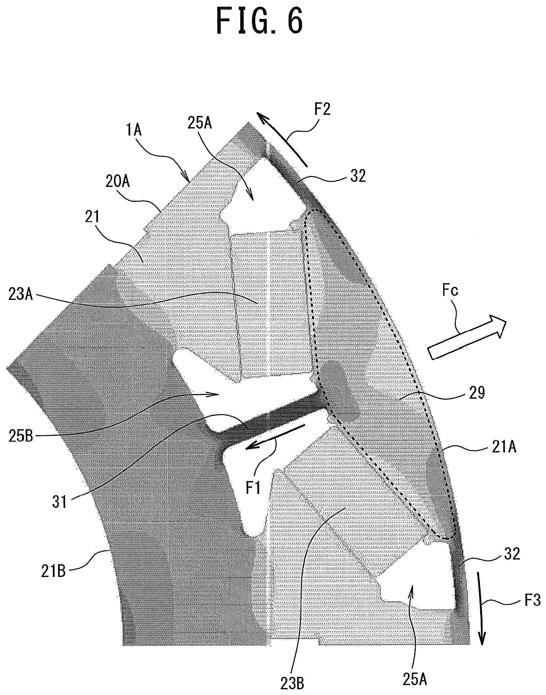

On the other hand, in a rotary electric machine 1A of a comparative example shown in Fig. 6, since a rotor 20A does not include the bridging portion 33, all stress caused by the centrifugal force Fc is handled by the drag force F1 caused by the center bridge portion 31 and the drag forces F2 and F3 caused by the outer bridge portion 32 and stress cannot be distributed. Therefore, since there is a risk that the outer bridge portion 32 is deformed, there is a risk that the leakage magnetic flux passing through the outer bridge portion 32 increases and the torque decreases when the thickness of the outer bridge portion 32 is increased in order to suppress the deformation.

Further, in the rotary electric machine 1 according to this embodiment, as shown in Fig. 3, the bridging portion 33 connects the outer bridge portion 32 and the wall surface 34 radially extending at a position circumferentially facing the outer peripheral ends of the permanent magnets 23A and 23B in the first flux barrier 25A.

Therefore, as shown in Fig. 4, a part of stress caused by the centrifugal force Fc can be handled as the drag forces F4 and F5 caused by the bridging portion 33 and the drag forces F4 and F5 can be further handled by the wall surface 34.

Thus, stress for deforming the outer bridge portion 32 to the outer peripheral side can be handled by the wall surface 34 connected to the bridging portion 33. Further, since the wall surface 34 connected to the bridging portion 33 radially extends, stress can be handled by the wall surface 34 without deforming the wall surface 34 and large stress can be handled by the bridging portion 33.

On the other hand, in the rotary electric machine 1A of the comparative example shown in Fig. 6, since the rotor 20A does not include the bridging portion 33, all stress caused by the centrifugal force Fc is handled as the drag force F1 caused by the center bridge portion 31 and the drag forces F2 and F3 caused by the outer bridge portion 32 and stress cannot be distributed. Therefore, there is a risk that at least one of the center bridge portion 31 and the outer bridge portion 32 is deformed.

Further, in the rotary electric machine 1 according to this embodiment, the outer bridge portion 32 includes the first outer bridge portion 32A which is located on one side in the circumferential direction in relation to the connection position with the bridging portion 33 and the second outer bridge portion 32B which is located on the other side in the circumferential direction in relation to the connection position with the bridging portion 33. Then, the thickness of the second outer bridge portion 32B is smaller than the thickness of the first outer bridge portion 32A.

That is, since a part of stress acting on the first outer bridge portion 32A and the second outer bridge portion 32B can be handled by the bridging portion 33, it is possible to decrease the thickness of the second outer bridge portion 32B which is a part of the outer bridge portion 32. Since it is possible to decrease the leakage magnetic flux amount passing through the second outer bridge portion 32B by decreasing the thickness of the second outer bridge portion 32B, it is possible to increase the magnetic flux density of the rotor core 21 and to increase the torque.

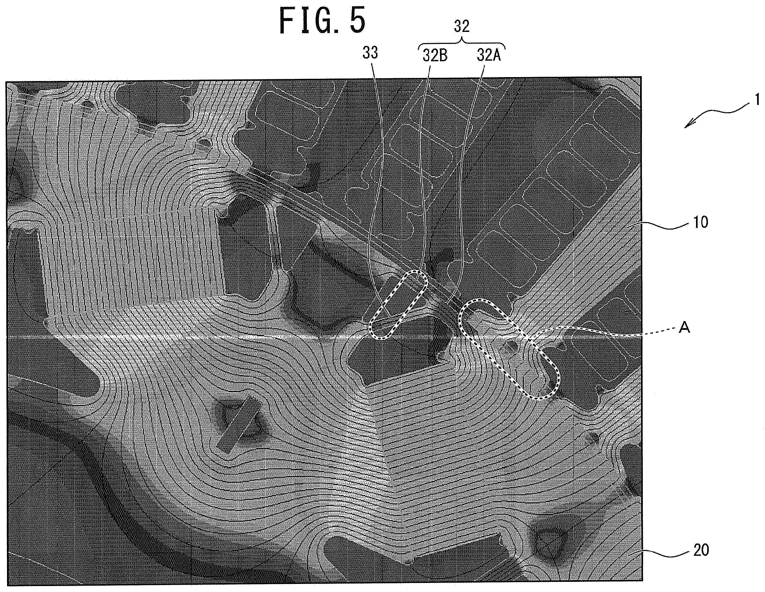

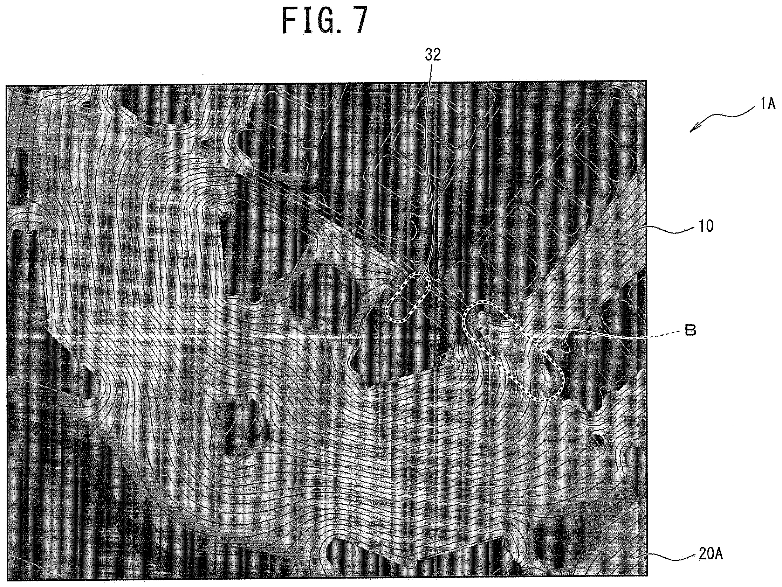

Specifically, in this embodiment of Fig. 5, the leakage magnetic flux passing through the first outer bridge portion 32A is branched into the second outer bridge portion 32B and the bridging portion 33 and the total number of the leakage magnetic fluxes passing through the second outer bridge portion 32B and the leakage magnetic flux passing through the bridging portion 33 was five. That is, the total number of the leakage magnetic fluxes passing through the whole outer bridge portion 32 was five. On the other hand, in the rotary electric machine 1A of the comparative example of Fig. 7, the number of the leakage magnetic fluxes passing through the outer bridge portion 32 of the rotor 20A was six. In this way, in this embodiment, it is possible to decrease the leakage magnetic flux passing through the outer bridge portion 32 compared to the comparative example. Since it is possible to decrease the leakage magnetic flux, the magnetic flux density of the air gap A between the stator 10 and the rotor 20 of the rotary electric machine 1 of this embodiment shown in Fig. 5 is larger than the magnetic flux density of the air gap B between the stator 10 and the rotor 20A of the rotary electric machine 1A of the comparative example shown in Fig. 7.

Here, since the magnetic flux has a property of returning to a pair of magnetic poles through the shortest path, there is a risk that the leakage magnetic flux passing through the bridging portion 33 increases and the torque decreases when the bridging portion 33 is connected to the side closer to the permanent magnets 23A and 23B than the circumferential center portion of the outer bridge portion 32.

On the other hand, since the stress acting on the first outer bridge portion 32A is distributed to the bridging portion 33 and the second outer bridge portion 32B, there is a risk that stress acting on the first outer bridge portion 32A increases and the first outer bridge portion 32A is largely deformed when the bridging portion 33 is disposed on the side farther from the permanent magnets 23A and 23B from the circumferential center portion of the outer bridge portion 32.

Here, in the rotary electric machine 1 according to this embodiment, the bridging portion 33 connects the circumferential center portion of the outer bridge portion 32 and the radial center portion of the wall surface 34.

In this way, it is possible to decrease the leakage magnetic flux amount and to distribute the stress at the same time by connecting the bridging portion 33 to the circumferential center portion of the outer bridge portion 32. Further, since it is possible to dispose the bridging portion 33 to be inclined with respect to the radial direction of the rotor core 21 by connecting the bridging portion 33 to the radial center portion of the wall surface 34, the drag force of the bridging portion 33 can be applied to both the stress acting on the outer bridge portion 32 in the circumferential direction (pulling direction) and the stress acting on the outer bridge portion in the radial direction.

Additionally, the rotary electric machine 1 can be suitably used not only as a drive source for a hybrid vehicle or an electric vehicle, but also as a drive source for, for example, a wind power generator or a machine tool.

While embodiments of this invention have been described, it is apparent that some artisan could have made changes without departing from the scope of this invention. It is intended that any and all such modifications and equivalents are involved in the appended claims.

### (DESCRIPTION OF REFERENCE NUMERALS)

1 ... Rotary electric machine, 10 ... Stator, 13 ... Slot, 14 ... Armature winding, 20 ... Rotor, 21 ... Rotor core, 23A, 23B ... Permanent magnet, 25A ... First flux barrier, 25B ... Second flux barrier, 29 ... Outer peripheral part, 31 ... Center bridge portion, 32 ... Outer bridge portion, 32A ... First outer bridge portion, 32B ... Second outer bridge portion, 33 ... Bridging portion, 34 ... Wall surface

## Claims

1. A rotary electric machine comprising:
a stator (10) provided with a plurality of slots (13) for arranging armature windings (14) therein; and
a rotor (20) provided with a rotor core (21) for embedding a plurality of pairs of permanent magnets (23A, 23B) arranged in a V shape extending toward the stator (10),
wherein the rotor core (21) includes:
a plurality of slit pairs (22) formed in a circumferential direction of the rotor (20), each one of the plurality of slit pairs (22) including a pair of slits (22A, 22B), the permanent magnets (23A, 23B) being fitted into the pair of slits (22A, 22B),
a first flux barrier (25A) formed adjacent to each of outer peripheral ends of the pair of permanent magnets (23A, 23B),
a second flux barrier (25B) formed adjacent to inner peripheral ends of the pair of permanent magnets (23A, 23B),
the respective corresponding slits (22A, 22B) of the permanent magnets (23A, 23B) and the first flux barrier (25A) and the second flux barrier (25B) form a space in which these are continuous to each other, in a state before the permanent magnets (23A, 23B) are fitted into the rotor core (21),
an outer bridge portion (32) circumferentially extending along an outer peripheral surface of the rotor core (21) on an outer peripheral side of the first flux barrier (25A),
a center bridge portion (31) radially extending through the second flux barrier (25B) and connecting an outer peripheral side and an inner peripheral side of the rotor core (21), and
a bridging portion (33) passing through the first flux barrier (25A) and connecting the outer bridge portion (32) and an inner peripheral portion of the rotor core (21),
wherein the bridging portion (33) connects the outer bridge portion (32) and a wall surface (34) radially extending at a position circumferentially facing the outer peripheral end of the permanent magnet (23A, 23B) in the first flux barrier (25A), the bridging portion (33) extending linearly in an inclined posture with respect to a radial direction of the rotor (20), and
wherein the bridging portion (33) connects a circumferential center portion of the outer bridge portion (32) and a radial center portion of the wall surface (34).

2. The rotary electric machine as claimed in claim 1,
wherein the outer bridge portion (32) includes:
a first outer bridge portion (32A) located on one side in relation to a connection position with the bridging portion (33) in the circumferential direction, and
a second outer bridge portion (32B) located on the other side in relation to a connection position with the bridging portion (33) in the circumferential direction, and
wherein the thickness of the second outer bridge portion (32B) is smaller than the thickness of the first outer bridge portion (32A).

## Patentansprüche

1. Rotierende elektrische Maschine, umfassend:
einen Stator (10), der mit einer Mehrzahl von Nuten (13) zum Anordnen von Ankerwicklungen (14) darin versehen ist; und
einen Rotor (20), der mit einem Rotorkern (21) zum Einbetten einer Mehrzahl von Paaren von Permanentmagneten (23A, 23B) versehen ist, die in einer V-Form angeordnet sind, die sich zum Stator (10) hin erstreckt, wobei
der Rotorkern (21) aufweist:
eine Mehrzahl von Schlitzpaaren (22), die in einer Umfangsrichtung des Rotors (20) ausgebildet sind, wobei jedes der Mehrzahl von Schlitzpaaren (22) ein Paar von Schlitzen (22A, 22B) einschließt, wobei die Permanentmagnete (23A, 23B) in das Paar von Schlitzen (22A, 22B) eingepasst sind,
eine erste Flussbarriere (25A), die angrenzend an jedes der äußeren Umfangsenden des Paares von Permanentmagneten (23A, 23B) ausgebildet ist,
eine zweite Flussbarriere (25B), die angrenzend an innere Umfangsenden des Paares von Permanentmagneten (23A, 23B) ausgebildet ist, wobei
die jeweiligen entsprechenden Schlitze (22A, 22B) der Permanentmagnete (23A, 23B) und die erste Flussbarriere (25A) und die zweite Flussbarriere (25B) einen Raum bilden, in dem diese miteinander durchgehend sind, in einem Zustand, bevor die Permanentmagnete (23A, 23B) in den Rotorkern (21) eingepasst werden,
einen äußeren Brückenabschnitt (32), der sich in Umfangsrichtung entlang einer äußeren Umfangsfläche des Rotorkerns (21) auf einer äußeren Umfangsseite der ersten Flussbarriere (25A) erstreckt,
einen mittleren Brückenabschnitt (31), der sich radial durch die zweite Flussbarriere (25B) erstreckt und eine äußere Umfangsseite und eine innere Umfangsseite des Rotorkerns (21) verbindet; und
einen Überbrückungsabschnitt (33), der durch die erste Flussbarriere (25A) verläuft und den äußeren Brückenabschnitt (32) und einen inneren Umfangsabschnitt des Rotorkerns (21) verbindet, wobei
der Überbrückungsabschnitt (33) den äußeren Brückenabschnitt (32) und eine Wandfläche (34) verbindet, die sich radial an einer Position erstreckt, die in Umfangsrichtung dem äußeren Umfangsende des Permanentmagneten (23A, 23B) in der ersten Flussbarriere (25A) zugewandt ist, wobei sich der Überbrückungsabschnitt (33) linear in einer geneigten Haltung in Bezug auf eine radiale Richtung des Rotors (20) erstreckt, und
wobei der Überbrückungsabschnitt (33) einen mittleren Umfangsabschnitt des äußeren Brückenabschnitts (32) und einen mittleren radialen Abschnitt der Wandfläche (34) verbindet.

2. Rotierende elektrische Maschine nach Anspruch 1, wobei
der äußere Brückenabschnitt (32) aufweist:
einen ersten äußeren Brückenabschnitt (32A), der auf einer Seite in Bezug auf eine Verbindungsposition mit dem Überbrückungsabschnitt (33) in der Umfangsrichtung angeordnet ist, und
einen zweiten äußeren Brückenabschnitt (32B), der auf der anderen Seite in Bezug auf eine Verbindungsposition mit dem Überbrückungsabschnitt (33) in der Umfangsrichtung angeordnet ist, und wobei die Dicke des zweiten äußeren Brückenabschnitts (32B) kleiner ist als die Dicke des ersten äußeren Brückenabschnitts (32A).

## Revendications

1. Machine électrique rotative comprenant :
un stator (10) pourvu d'une pluralité d'encoches (13) pour y agencer des enroulements d'induit (14) ; et
un rotor (20) pourvu d'un noyau de rotor (21) pour y loger une pluralité de paires d'aimants permanents (23A, 23B) agencées en forme de V s'étendant vers le stator (10),
dans laquelle le noyau de rotor (21) inclut :
une pluralité de paires de fentes (22) formées dans une direction circonférentielle du rotor (20), chacune de la pluralité de paires de fentes (22) incluant une paire de fentes (22A, 22B), les aimants permanents (23A, 23B) étant ajustés dans la paire de fentes (22A, 22B),
une première barrière de flux (25A) formée adjacente à chacune des extrémités périphériques externes de la paire d'aimants permanents (23A, 23B),
une seconde barrière de flux (25B) formée adjacente aux extrémités périphériques internes de la paire d'aimants permanents (23A, 23B),
les fentes correspondantes respectives (22A, 22B) des aimants permanents (23A, 23B) et la première barrière de flux (25A) et la seconde barrière de flux (25B) forment un espace dans lequel celles-ci sont continues entre elles, dans un état avant que les aimants permanents (23A, 23B) ne soient ajustés dans le noyau de rotor (21),
une partie de pont externe (32) s'étendant circonférentiellement le long d'une surface périphérique externe du noyau de rotor (21) sur un côté périphérique externe de la première barrière de flux (25A),
une partie de pont centrale (31) s'étendant radialement à travers la seconde barrière de flux (25B) et reliant un côté périphérique externe et un côté périphérique interne du noyau de rotor (21) ; et
une partie de pontage (33) passant à travers la première barrière de flux (25A) et reliant la partie de pont externe (32) et une partie périphérique interne du noyau de rotor (21),
dans laquelle la partie de pontage (33) relie la partie de pont externe (32) et une surface de paroi (34) s'étendant radialement à une position faisant face circonférentiellement à l'extrémité périphérique externe de l'aimant permanent (23A, 23B) dans la première barrière de flux (25A), la partie de pontage (33) s'étendant de manière linéaire selon une posture inclinée par rapport à une direction radiale du rotor (20), et
dans laquelle la partie de pontage (33) relie une partie centrale circonférentielle de la partie de pont externe (32) et une partie centrale radiale de la surface de paroi (34).

2. Machine électrique rotative telle que revendiquée dans la revendication 1,
dans laquelle la partie de pont externe (32) inclut :
une première partie de pont externe (32A) située sur un côté par rapport à une position de liaison avec la partie de pontage (33) dans la direction circonférentielle, et
une seconde partie de pont externe (32B) située sur l'autre côté par rapport à une position de liaison avec la partie de pontage (33) dans la direction circonférentielle, et
dans laquelle l'épaisseur de la seconde partie de pont externe (32B) est inférieure à l'épaisseur de la première partie de pont externe (32A).
